# EUROPEAN PATENT APPLICATION

(11) **EP 1 914 990 A1**
(43) Date of publication of application: **23.04.2008**
(21) Application number: 06465015.3
(22) Date of filing: 19.10.2006
(51) Int. Cl.: H04N 7/16

(54) **Electronic module for digital television receiver**

(71) Applicant: ADVANCED DIGITAL BROADCAST S.A., 1218 Grand-Saconnex (CH)
(72) Inventor: Dabrowa, Andrzej, 65-012, Zielona Gora (PL); Szczesny, Konrad, 65-380, Zielona Gora (PL); Sergiel, Przemyslaw, 66-006, Ochla (PL)
(74) Representative: Hudy, Ludwik

(57) **Abstract**

An electronic module for a digital television receiver comprises a multimedia CPU (311), a non-volatile memory block (312) connected with the multimedia CPU (311) via a memory interface (320) and storing a booter application for initializing the start-up of the digital television receiver, and a buffer (313) connected to the memory interface (320), configurable to enable or block access to the memory interface (320) for components (306,309) external to the module. The invention provides a better solution for securing the set-top box elements, including CA system elements and proprietary set-top box software, to prevent unauthorized access to them, their monitoring or replacement.

## Description

The invention concerns an electronic module for a digital television receiver.

In a design of a digital television receiver, also called a set-top box (STB), a lot of attention must be paid to security issues. The elements often subject to security risks are the conditional access (CA) system and proprietary low- and high-level software modules.

The CA system combines hardware elements (such as descramblers, security chips, Smart Cards) and software elements (CA kernel application, encryption algorithms) to decrypt protected content or to enable a specific device functionality. The operation of the CA system usually depends on subscription fee payments, and certain users tend to "hack" the system in order to avoid these payments. Early CA systems utilized Smart Cards to store user identity and subscription information, but hacking techniques have been developed to produce falsified cards. Later, further hacking techniques have been developed to produce pirated CA software to replace the original software provided by the CA vendor. Therefore, it has become evident that in order to provide a completely safe CA system, all the elements of the system shall be secured to prevent hacking.

Proprietary software, such as an operating system or high-level user applications, can be also subject to pirate attacks, e.g. for the purpose of unlocking specific functionality or cloning the software at unauthorized devices. One method to protect such software is to hash or scramble the code with a signature key. The authenticity of software can be checked during start-up of the set-top box by a booter application. Therefore, it is essential to secure the booter application and signature keys against unauthorized access and modifications, as it guarantees the security of the higher-level software.

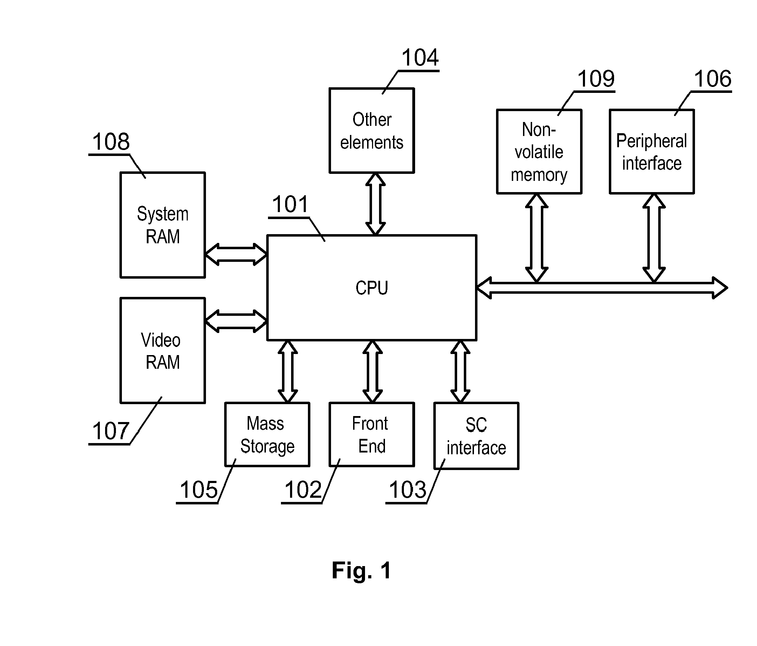

A conventional set-top box, as shown in Fig. 1, comprises a multimedia CPU 101 which controls the operation of the set-top box and performs stream-processing functions, such as decoding and descrambling. The CPU 101 receives data streams through a front-end block 102, for example a satellite, terrestrial, cable or an IPTV front-end. The software executed by the CPU is stored in a non-volatile memory 109, sharing a memory interface with other peripheral devices via a peripheral interface 106, such as an Ethernet interface. Software is executed in a system RAM 108, and the received audio/video stream is decoded in a video RAM 107. The CA system elements may cooperate with a smart card placed in a smart card interface 103. A mass storage device 105, e.g. a hard disk, may be used to store additional software or audio/video streams. The CPU 101 also communicates with other elements 104, such as a front panel interface, back end processors, etc.

The conventional set-top box architecture presented in Fig. 1 has a number of security problems. For example, the CPU and individual memory chips, as well as data buses between them are easily accessible. Software stored in the memory chips, including CA system components and other proprietary software can be easily read and possibly replaced. Furthermore, transmitted data, such as CA keys or descrambled audio/video streams, can be easily read as well. Moreover, apart from re-programming, the memory chips can be replaced by other chips with pirated software. A conventional method to secure these elements is to cover the elements and data buses with a strong adhesive material, such as an epoxy, to block physical access to these elements. However, such solution introduces a substantial cost at the production stage. Further, it does not guarantee traceability of proprietary software, which can be copied and duplicated in unauthorized devices produced by unauthorized parties. Moreover, elements covered by the epoxy cannot be replaced and in order to service the set-top box, the whole printed circuit board must be changed.

It is thus necessary to provide a better solution for securing the set-top box elements, including CA system elements and proprietary set-top box software, to prevent unauthorized access to them, their monitoring or replacement. It is also necessary to provide a solution for secure traceability of proprietary software.

The present invention solves the aforementioned problems by providing an electronic module comprising a multimedia CPU, a non-volatile memory connected with the CPU via a memory interface, and a buffer configurable to enable or block access to the memory interface for components external to the module. The non-volatile memory stores at least a booter application for initializing the start-up of the digital television receiver. It may further store CA system signature keys, high-level software protection keys or a loader application. Such configuration protects integrity of software stored in the non-volatile memory block, especially of the booter, the loader, the CA system kernel, signature keys and serialization data. In addition, the module provides higher level of security of data and audio/video content by comprising integrated system RAM and video RAM blocks. Further, the module may comprise a smart card chip for improved CA system security level. The module can be packaged in Chip on Board, Die on Board, Multi Chip Module, Multi Die Module or System in Package technology.

The invention will now be described by way of example and with reference to the accompanying drawings in which:
Fig. 1 presents a conventional set-top box architecture;
Fig. 2 presents a set-top box architecture with an STB module according to the first embodiment of the invention;
Fig. 3 presents a configuration of the buffer of the STB module;
Fig. 4 presents a set-top box architecture with an STB module according to the second embodiment of the invention;
Fig. 5 presents a set-top box architecture with an STB module according to the third embodiment of the invention;
Fig. 6 presents a configuration of internal non-volatile memory of the STB module; and
Fig. 7 presents a flow chart of start-up process of the set-top box

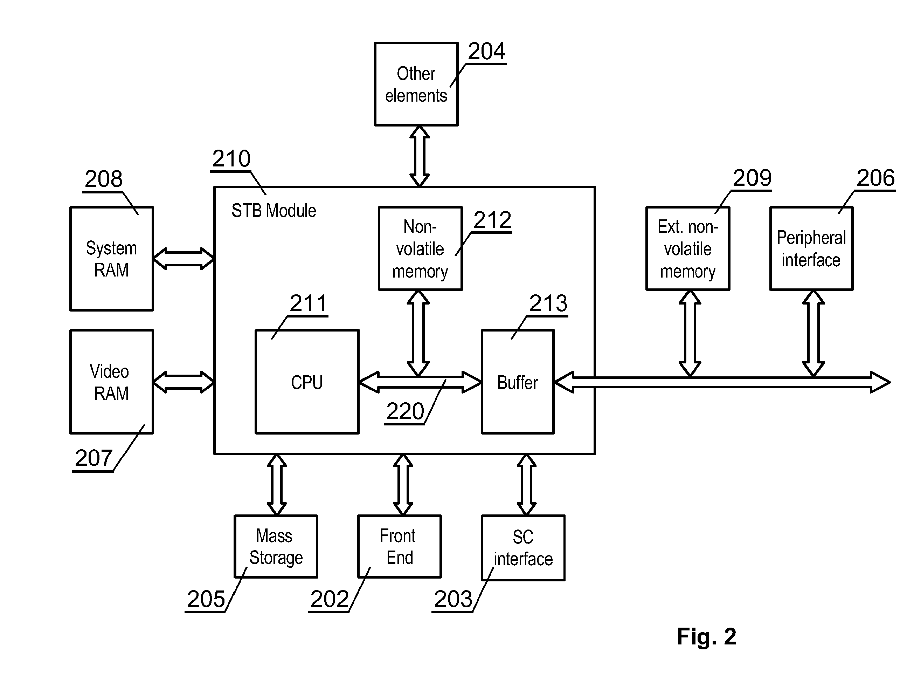

Fig. 2 presents a set-top box architecture with an electronic module 210, called an STB module throughout the description, according to the first embodiment of the invention.

The STB module 210 is provided in a package, which contents are inaccessible in a direct way from the outside. For example, the STB module can be made in a technology such as Chip on Board (COB), Die on Board (DOB), Multi Chip Module (MCM), Multi Die Module (MDM) or System in Package (SiP). Such solution guarantees physical security of data stored and transmitted within the module, including essential CA system data and proprietary low- and high-level software.

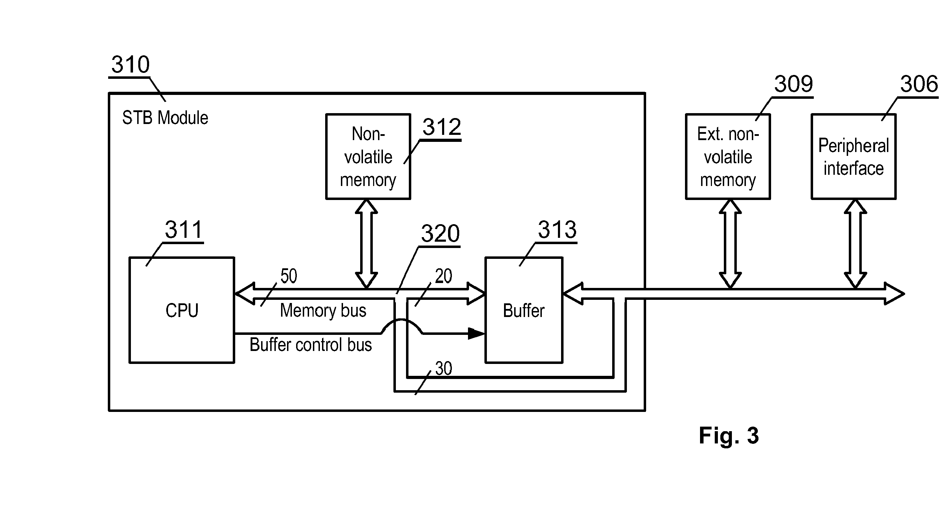

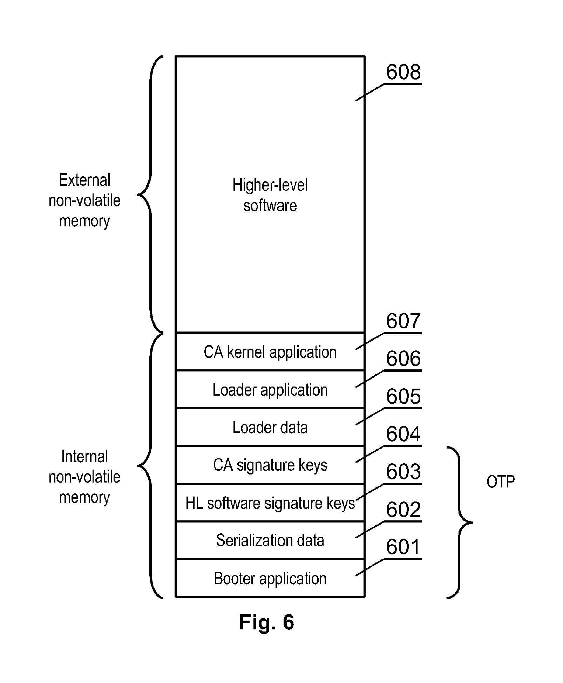

In the first embodiment, the STB module 210 comprises a multimedia CPU 211, an internal non-volatile memory 212 communicating with the CPU 211 via a memory interface 220 and a buffer 213. The buffer 213 is configurable to enable or block access to the memory interface 220 for components 206, 209 external to the module. Therefore, the buffer enables the CPU to exchange data with components external to the STB module and blocks access to the contents of the non-volatile memory 212 block and data transmitted between the multimedia CPU 211 and the non-volatile memory block 212. A more detailed configuration of the buffer 213 is shown in Fig. 3. The internal non-volatile memory 212, e.g. a NOR Flash memory die, stores at least a booter application for secure start-up of the system, and preferably other elements, as shown in details in Fig. 6. By securing the booter application, all other system elements whose authenticity is checked by the booter are protected as well. The CA system elements placed in the internal non-volatile memory 212 are also secure.

The set-top box may be equipped with another non-volatile memory block 209, for example a Flash NAND memory chip, external to the module 210. The size of that memory block may be substantially greater than the size of the internal non-volatile memory block, to store high-level operating system and applications. The external non-volatile memory block 209 and the peripheral interface 206 communicate with the CPU in the STB module via the memory interface 220. The access to the internal non-volatile memory block 212 via this interface 220 is controlled by means of a buffer 213. Such configuration, i.e. use of the same memory interface for both the internal 212 and external 209 non-volatile memory blocks allows use of a standard processor, designed for a conventional application as shown in Fig. 1. This allows for using standard components inside the STB module 210, which considerably reduces the costs and allows for an easy design of the module.

The other elements of the set-top box architecture, such as a front-end block 202, an SC interface 203, others elements 204, a mass storage 205, a video RAM 207 and a system RAM 208 communicate with the STB module 210 in a conventional way, as described in Fig. 1.

Fig. 3 presents a configuration of the buffer 313 of the STB module 310. The CPU 311 has a memory interface 320 via which both the internal non-volatile memory and external modules, such as external non-volatile memory 309 or peripheral interfaces 306, may communicate. It is essential to block access to the contents of the non-volatile memory block 312 and data transmitted between the CPU 311 and the non-volatile memory block 312 for the external modules. This is made possible by the buffer 313, which is configurable to enable or block access to the memory interface 320 for the external components. In the presented example, the memory interface 320 is a bus having 50 lines, being data, address and control lines. The buffer 313 may control access to all the bus lines, or, as presented in the example, only to a number of lines, for example 20 lines. Securing only a part of lines does not limit safety, as information on only part of address or only part of data word is useless for a potential hacker. Limiting the number of protected lines simplifies the design of the module, as a relatively small buffer 313 (or a small number of buffers) can be used. A secure protection can be obtained by protecting a reasonable number of lines, for example at least 1/3 of the memory bus lines. A 74LVC245 chip can be used as a buffer. The buffer 313 operation is controlled by the CPU 311 via a buffer control bus. In case the CPU 311 accesses the internal memory 312 of the module, it sets the buffer 313 to a state in which access to the memory interface from the outside is blocked. The buffer 313 is unlocked only in situation where communication with external modules is necessary.

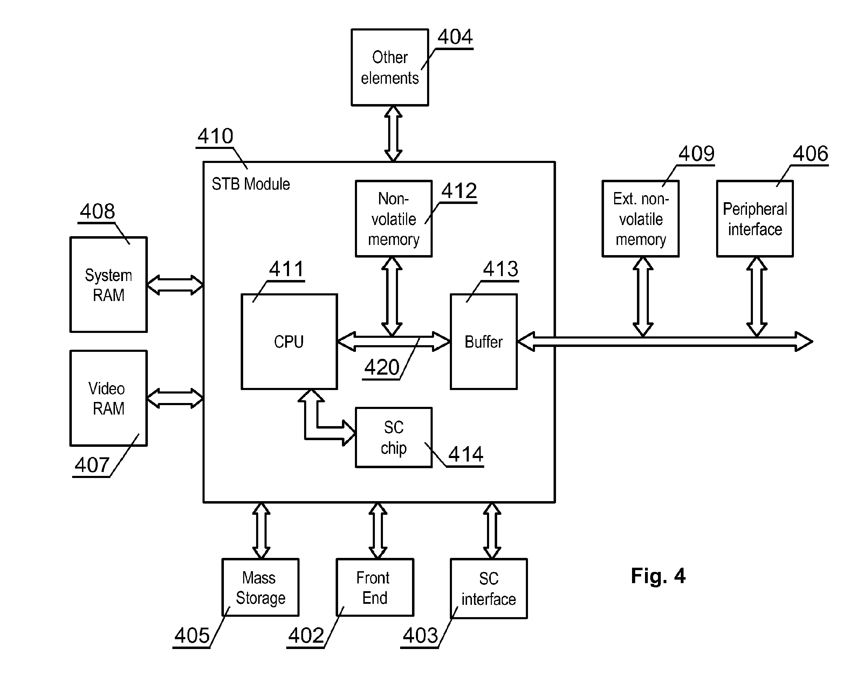

Fig. 4 presents a set-top box architecture with an STB module 410 according to the second embodiment of the invention.

In comparison to the embodiment shown in Fig. 2, the STB module 410, besides a non-volatile memory 412 and a buffer 413, comprises an internal smart card chip 414 used by the CA system. Such configuration provides complete security of data transmitted between the CPU 411 and the smart card chip 414, such as descrambling keys for received video and audio content. The set-top box may be equipped with a peripheral interface 406 and another non-volatile memory block 409.

In addition, an external smart card interface 403 can be provided for additional applications or for additional CA system having lower security requirements.

The other elements of the set-top box architecture, such as a front-end block 402, others elements 404, a mass storage 405, a video RAM 407 and a system RAM 408, communicate with the STB module 410 in a conventional way, as described in Fig. 1.

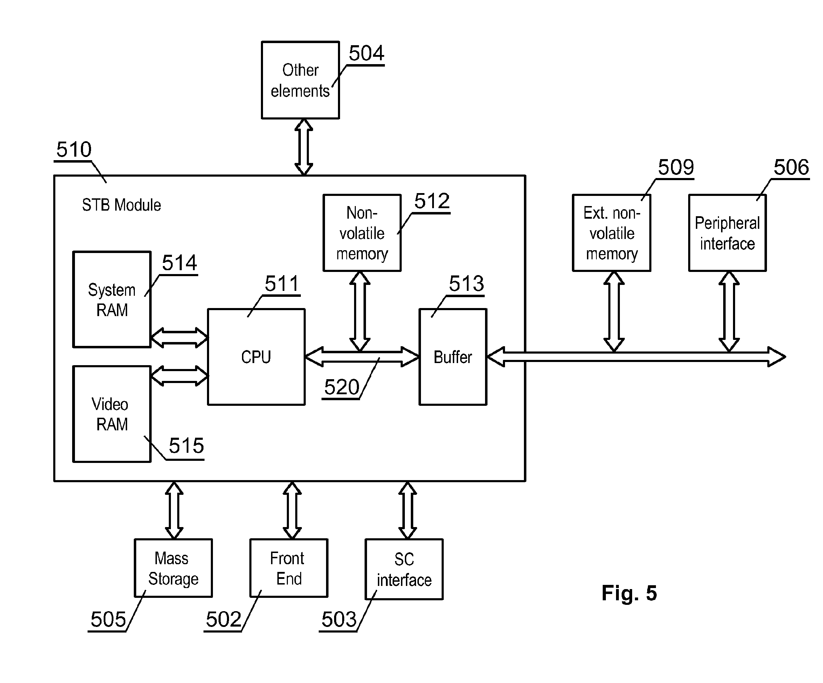

Fig. 5 presents a set-top box architecture with an STB module 510 according to the third embodiment of the invention.

In comparison to the embodiment shown in Fig. 2, the STB module 510, besides a non-volatile memory 512 and a buffer 513, comprises integrated Video RAM 515 and System RAM 514 chips. Integration of the Video RAM 515 enables greater level of content protection, as the descrambled content is no longer accessible outside the STB module 510. Moreover, integration of the System RAM 514 enables greater level of CA system protection, by blocking access to CA keys and fragments of CA system software executed in the system RAM 514.

The other elements of the set-top box architecture, such as a front-end block 502, an SC interface 503, others elements 504, a mass storage 505, a peripheral interface 506 and another non-volatile memory block 509, communicate with the STB module 510 in a conventional way, as described in Fig. 1.

Further embodiments are possible, such as integrating only Video RAM or System RAM inside the STB module. Moreover, embodiments of fig. 4 and 5 can be combined, to provide an STB module with integrated CPU, non-volatile memory, buffers, System RAM, Video RAM and smart card chip, thereby providing the greatest level of security.

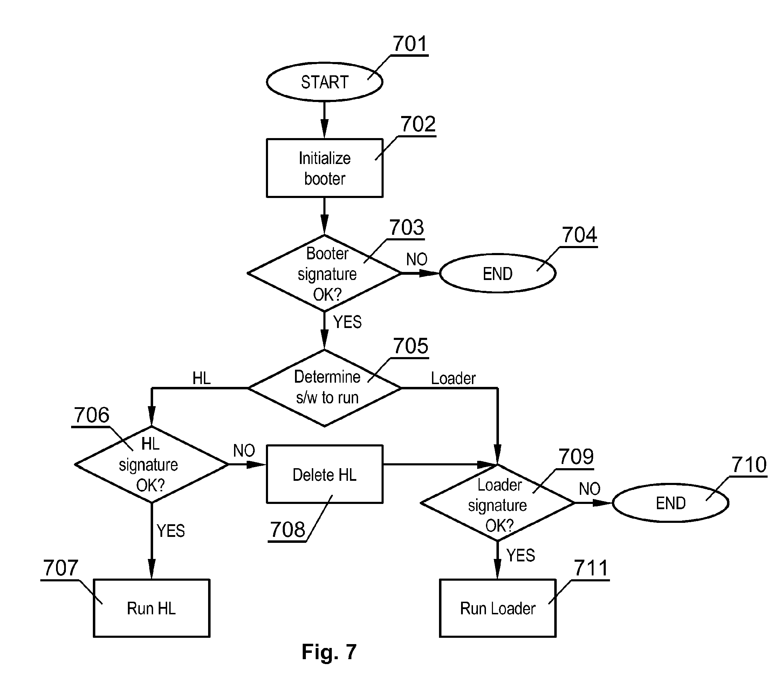

Fig. 6 presents a configuration of the non-volatile memory of the set-top box. The internal non-volatile memory comprises a booter application 601 for initializing the start-up process of the set-top box according to the procedure of Fig. 7. It may also comprise additional data, such as serialization data 602, high level software signature keys 603, CA signature keys 604 or loader data 605. As an option, the internal memory or its fragment can be configured as an OTP (one-time-programming) block, which guarantees that its contents will not be changed.

Other applications can be stored in the internal or in the external non-volatile memory, depending on the system design. For example, the loader application 606, used to update higher-level software 607, can be stored in the internal memory together with loader data. The internal memory, if its size permits, may store CA kernel application 607 for improved CA system security.

Data in the external memory, such as high-level software 608, is encrypted using high level software signature keys 603 such that it is accessible only to STB modules having specific serialization data 602. For example, the encryption may be performed according to the X.509 standard. This enables traceability of many production parameters, such as the quantity of modules produced, their configuration, the client and software versions. It also prevents the software from unauthorized modifications, monitoring or replacement

Fig. 7 presents a flow chart of start-up process of the set-top box. The procedure is initiated in step 701 at a power-up or after a hard reset of the set-top box. First, the booter application is initialized in step 702 and the booter signature is checked in step 703 to ascertain that the booter application has not been changed by unauthorized persons. If the booter signature is not correct, the procedure stops in step 704. If the booter signature is correct, it is determined in step 705 which application should be executed next - a loader or a high level application. The loader can be executed at the first power-up of the set-top box at customer premises or if a flag has been set by the high level software. The high level application is executed if no need for software update has been signaled. The signature of the high level application is checked in step 706 and if it is correct, the high level application is executed in step 707. If the signature is not correct, the high level code can be deleted in step 708 and the procedure continues to initiate the loader. The loader signature is checked in step 709 and if it is not correct, then the procedure stops in step 710. If the loader signature is correct, the loader application is executed in step 711 for updating the software.

## Claims

1. An electronic module for a digital television receiver, comprising:
- a multimedia CPU (210);
- a non-volatile memory block (211) connected with the multimedia CPU (210) via a memory interface (220) and storing a booter application (601) for initializing the start-up of the digital television receiver; and
- a buffer (213) connected to the memory interface (220), configurable to enable or block access to the memory interface (220) for components (206, 209) external to the module.

2. The electronic module according to claim 1, **characterized in that** the non-volatile memory block (213) has a one-time-programming block and the booter application (601) is stored in the one-time-programming block.

3. The electronic module according to claim 1, **characterized in that** the non-volatile memory block (213) further stores a CA kernel application (607).

4. The electronic module according to claim 1, **characterized in that** the non-volatile memory block further stores signature keys.

5. The electronic module according to claim 4, **characterized in that** the signature keys are CA system signature keys (604).

6. The electronic module according to claim 4, **characterized in that** the signature keys are high level software protection keys (603).

7. The electronic module according to claim 1, **characterized in that** the non-volatile memory block further stores a loader application (606) for updating the higher-level software.

8. The electronic module according to claim 1, **characterized in that** the non-volatile memory block further stores serialization data (602), unique for the module.

9. The electronic module according to claim 1, **characterized in that** it further comprises a smart card chip (414) connected to the multimedia CPU (410).

10. The electronic module according to claim 1, **characterized in that** it further comprises a system RAM (514) connected to the multimedia CPU (511) for executing applications operated by the multimedia CPU (511).

11. The electronic module according to claim 1, **characterized in that** it further comprises a video RAM (515) connected to the multimedia CPU (511) for storing video data decoded by the multimedia CPU (511).

12. The electronic module according to claim 1, **characterized in that** the memory interface (320) is a bus having data, address and control lines and the buffer (313) is configurable to enable or block access to at least one line.

13. The electronic module according to claim 1, **characterized in that** the memory interface (320) is a bus having data, address and control lines and the buffer (313) is configurable to enable or block access to at least 1/3 of the lines.

14. The electronic module according to claim 1, **characterized in that** it is packaged in Chip on Board (COB), Die on Board (DOB), Multi Chip Module (MCM), Multi Die Module (MDM) or System in Package (SiP) technology.
